(19) Europäisches Patentamt
European Patent Office
Office européen des brevets

(11) **EP 4 718 789 A1**

(12) **EUROPEAN PATENT APPLICATION**
published in accordance with Art. 153(4) EPC

(43) Date of publication:
01.04.2026 Bulletin 2026/14

(51) International Patent Classification (IPC):
**H04L 25/02** (2006.01)

(21) Application number: 24810008.3

(22) Date of filing: 05.03.2024

(52) Cooperative Patent Classification (CPC):
**H04B 7/0413; H04B 17/345; H04L 1/00; H04L 25/02**

(86) International application number:
**PCT/CN2024/080182**

(87) International publication number:
**WO 2024/239759 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 24.05.2023 CN 202310595845

(71) Applicant: Sanechips Technology Co., Ltd.
**Shenzhen, Guangdong 518055 (CN)**

(72) Inventors:
• WU, Gang
  **Shenzhen, Guangdong 518055 (CN)**
• LIANG, Fei
  **Shenzhen, Guangdong 518055 (CN)**
• DONG, Xuetao
  **Shenzhen, Guangdong 518055 (CN)**

(74) Representative: Savi, Massimiliano et al
**Notarbartolo & Gervasi S.p.A.
Viale Achille Papa, 30
20149 Milano (IT)**

(54) **SPHERE DECODING DETECTION METHOD AND APPARATUS**

(57) Embodiments of the present disclosure provide a sphere decoding detection method and apparatus. The method comprises: performing grouping rearrangement on a channel estimation matrix of a received signal to obtain an interference user group and a target user group; and first detecting the target user group, and then detecting the interference user group.

Perform grouping rearrangement on a channel estimation matrix of a received signal to obtain an interfering user group and a target user group — S202

Perform detection on the target user group and then perform detection on the interfering user group — S204

FIG. 2

## Description

### CROSS-REFERENCE TO RELATED APPLICATION

The present disclosure is filed on the basis of Chinese patent application No. CN202310595845.9 filed May 24, 2023 entitled "SPHERE DECODING DETECTION METHOD AND APPARATUS", and claims priority to the Chinese patent application, the entire contents of which are incorporated herein by reference.

### TECHNICAL FIELD

Embodiments of the present disclosure relate to the field of communication technologies, and in particular to a sphere decoding detection method and device.

### BACKGROUND

Multiple Input Multiple Output (MIMO) technology is one of the key technologies to achieve high spectral efficiency and improve system capacity in wireless communication systems, and has been widely used in 5G NR and WIFI7 systems. MIMO improves spectrum efficiency for a single user. Multi-user MIMO allows multiple parallel data streams under the same time-frequency resource to be sent to different user equipments (UEs), or allow different UEs to use the same time-frequency resource to send data to a gNB. The distance between UEs in multi-user MIMO is greater than the distance between antennas in single-user MIMO, making it easier to transmit multiple data streams in parallel, thereby further improving the spectral efficiency. Correspondingly, MIMO detection technology at the receiving end has become one of the key technologies that determine the performance of 5G NR and WIFI7.

In MIMO detection technology, sphere decoding (SD) detection can approximate the optimal performance, i.e., maximum likelihood (ML) performance, but its complexity is much lower than that of ML, so it is often used by MIMO receivers. SD includes two parts: orthogonal-triangular decomposition (QR decomposition) and search detection. Sorting in QR decomposition determines the search and detection order of the layers in MIMO. In multi-user MIMO, when different modulation and coding schemes (MCSs) are configured for detection layers of MIMO, how to properly sort the detection of the layers in SD to achieve better detection performance is a problem to be solved by the present disclosure.

### SUMMARY

Embodiments of the present disclosure provide a sphere decoding detection method and device, to at least solve the problem of unsatisfactory detection performance due to improper sorting of detection of the layers in sphere decoding detection in the related art.

According to an embodiment of the present disclosure, a sphere decoding detection method is provided, including: performing grouping rearrangement on a channel estimation matrix of a received signal to obtain an interfering user group and a target user group; and performing detection on the target user group and then performing detection on the interfering user group.

According to another embodiment of the present disclosure, a sphere decoding detection device is provided, including: a sorting module configured for performing grouping rearrangement on a channel estimation matrix of a received signal to obtain an interfering user group and a target user group; and a detection module configured for performing detection on the target user group and then performing detection on the interfering user group.

According to still another embodiment of the present disclosure, a computer-readable storage medium is further provided, storing a computer program, wherein the computer program is configured for executing, when run, steps in any one of the above method embodiments.

According to still another embodiment of the present disclosure, an electronic device is further provided, including a memory and a processor, wherein the memory is configured for storing a computer program, and the processor is configured for running the computer program to execute steps in any one of the above method embodiments.

### BRIEF DESCRIPTION OF DRAWINGS

FIG. 1 is a structural block diagram of hardware of a computer terminal for implementing a sphere decoding detection method according to an embodiment of the present disclosure;

FIG. 2 is a flowchart of a sphere decoding detection method according to an embodiment of the present disclosure;

FIG. 3 is a structural block diagram of a sphere decoding detection device according to an embodiment of the present disclosure;

FIG. 4 is a structural block diagram of a sphere decoding detection device according to an embodiment of the present disclosure;

FIG. 5 is a structural block diagram of a sphere decoding detection device according to an embodiment of the present disclosure;

FIG. 6 is a structural block diagram of a sphere decoding detection device according to an embodiment of the present disclosure;

FIG. 7 is a diagram showing the principle of a QR decomposition process according to an embodiment of the present disclosure; and

FIG. 8 is a diagram showing comparison of performance of different QR decomposition schemes of multi-user MIMO according to an embodiment of the present disclosure.

**DETAILED DESCRIPTION**

The present disclosure will be described in detail below with reference to the drawings and embodiments.

It should be noted that in the specification, claims, and accompanying drawings of the embodiments of the present disclosure, the terms "first", "second" or the like are intended to distinguish between similar objects but do not indicate a particular order or sequence.

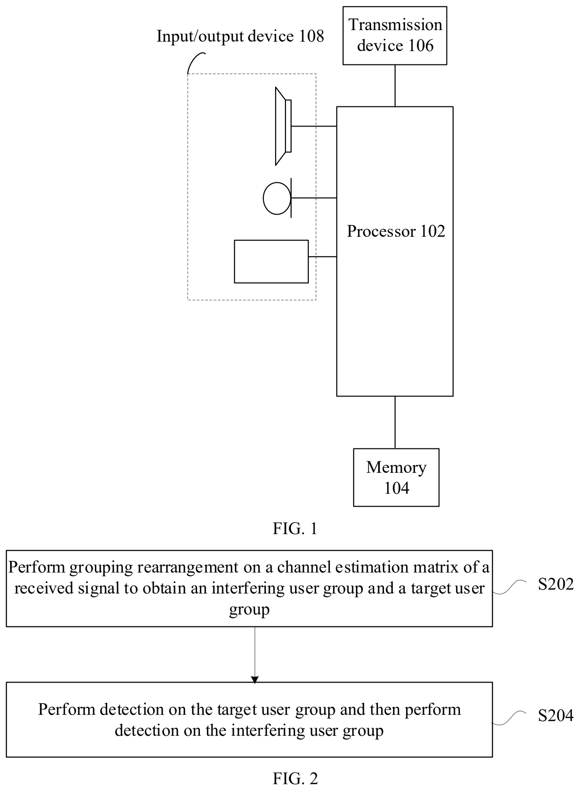

Method embodiments provided in the embodiments of the present disclosure may be executed in a mobile terminal, a computer terminal, or similar computing devices. Using execution on a computer terminal as an example, FIG. 1 is a structural block diagram of hardware of a computer terminal for implementing a sphere decoding detection method according to an embodiment of the present disclosure; As shown in FIG. 1, the computer terminal may include one or more (only one shown in FIG. 1) processors 102 (where the processor 102 may include, but is not limited to, a processing device such as a microprocessor (MCU) or a programmable logic device (FPGA)) and a memory 104 configured for storing data. The computer terminal may further include a transmission device 106 and an input/output device 108 to provide a communication function. It can be understood by those having ordinary skills in the art that the structure shown in FIG. 1 is merely an example and does not limit the structure of the computer terminal. For example, the computer terminal may also include more or fewer components than those shown in FIG. 1 or have a different configuration from that shown in FIG. 1.

The memory 104 may be configured for storing a computer program, for example, software programs and modules of application software, e.g., a computer program corresponding to a sphere decoding detection method according to an embodiment of the present disclosure. The processor 102 runs the computer program stored in the memory 104 to execute various functional applications and data processing, i.e., implement the method described above. The memory 104 may include a high speed random access memory, and may also include a nonvolatile memory, e.g., one or more magnetic storage devices, flash memories, or other nonvolatile solid-state storage devices. In some examples, the memory 104 may further include memories located remotely from the processor 102, and the remote memories may be connected to the computer terminal via a network. Examples of the network include, but are not limited to, the Internet, an intranet, a local area network, a mobile communication network, and combinations thereof.

The transmission device 106 is configured for receiving or sending data via a network. Examples of the network may include a wireless network provided by a communication provider of the computer terminal. In one example, the transmission device 106 includes a Network Interface Controller (NIC), which may be connected to another network device via a base station to communicate with the Internet. In one example, the transmission device 106 may be a Radio Frequency (RF) module, which is configured for communicating with the Internet in a wireless manner.

An embodiment of the present disclosure provides a sphere decoding detection method run on the computer terminal. FIG. 2 is a flowchart of a sphere decoding detection method according to an embodiment of the present disclosure. As shown in FIG. 2, the method includes the following steps S202 and S204.

At S202, grouping rearrangement is performed on a channel estimation matrix of a received signal to obtain an interfering user group and a target user group.

In an example embodiment, performing grouping rearrangement on a channel estimation matrix of a received signal includes: grouping and arranging columns of the channel estimation matrix according to an order of first target users and then interfering users.

In an example embodiment, before performing grouping rearrangement on a channel estimation matrix of a received signal, the method further includes: determining a number of users; performing QR decomposition on the target user in a case where the number of users is 1; and performing the QR decomposition on the target user group in a case where the number of users is greater than 1.

In an example embodiment, before S204, the method further includes: performing sorted orthogonal-triangular decomposition (QR decomposition) on the interfering user group, and then performing the sorted QR decomposition on the target user group. Performing sorted QR decomposition on the interfering user group includes: performing, in ascending order of values of signal-to-noise ratios (SNRs) of the interfering user group, the sorted QR decomposition sequentially on columns of the interfering user group that correspond to the SNRs.

Performing the sorted QR decomposition on the target user group includes: determining a number of MCSs for the target user group; performing a first decomposition in a case where the number of MCSs is 1, wherein the first decomposition is performing the sorted QR decomposition on a column of the target user group corresponding to a second smallest SNR, and repeatedly performing the first decomposition on remaining columns until the sorted QR decomposition has been completed for all the columns; and performing a second decomposition in a case where the number of MCSs is greater than 1, wherein the second decomposition is performing the QR decomposition on a column of the target user group corresponding to a second smallest SNR and a non-highest MCS, and repeatedly performing the second decomposition on remaining columns until the QR decomposition has been completed for all the columns.

At S204, detection is performed on the target user group and then detection is performed on the interfering user group.

In an example embodiment, before S204, the method further includes: preprocessing the received signal on which the QR decomposition has been completed.

In an example embodiment, performing detection on the target user group includes: performing search detection on a layer of the target user group corresponding to a smallest SNR and then performing the search detection on remaining layers in descending order of SNRs in a case where a number of MCSs is 1; and performing the search detection on a layer of the target user group corresponding to a highest MCS and a smallest SNR and then performing the search detection on remaining layers in descending order of SNRs in a case where the number of MCSs is greater than 1.

Performing detection on the interfering user group includes: performing search detection on layers of the target user group in descending order of SNRs.

Through the above steps, a sphere decoding detection method is provided, which includes: performing grouping rearrangement on a channel estimation matrix of a received signal to obtain an interfering user group and a target user group; and performing detection on the target user group and then performing detection on the interfering user group. As such, the problem of unsatisfactory detection performance due to improper sorting of detection of the layers in sphere decoding detection in the related art is solved, and the detection performance of sphere decoding detection is improved.

The above steps may be executed by a base station, a terminal, or the like, but the present disclosure is not limited thereto.

From the above detailed description of the embodiments, those having ordinary skills in the art can clearly understand that the methods in the above embodiments can be implemented by software and a necessary general-purpose hardware platform, and of course can also be implemented by hardware, but in many cases, the former is a better implementation. Based on such an understanding, the technical schemes of the embodiments of the present disclosure essentially or the part contributing to conventional technologies may be embodied in the form of a software product. The computer software product is stored in a storage medium (such as a ROM/RAM, a magnetic disk, an optical disc, etc.), and includes several instructions for instructing a terminal device (which may be a mobile phone, a computer, a server, a network device, or the like) to execute the methods described in the embodiments of the present disclosure.

An embodiment of the present disclosure further provides a sphere decoding detection device. The device is used for implementing the above-mentioned embodiments and preferred implementations. Details that have already been described will not be repeated herein. As used herein, the term "module" may be a combination of software and/or hardware that implements a predetermined function. Although the device described in the following embodiments is preferably implemented in the form of software, an implementation using hardware or using a combination of software and hardware is also possible and can be conceived of.

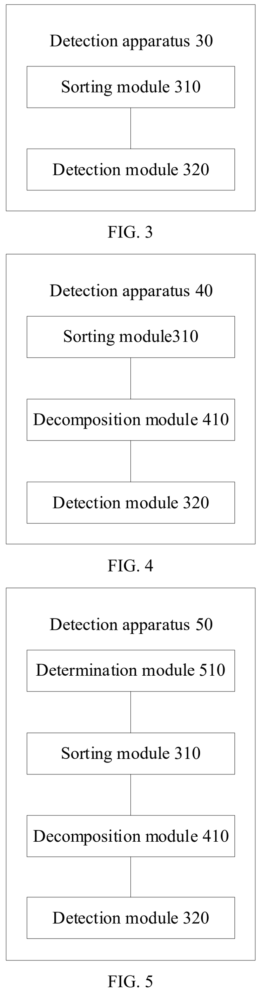

FIG. 3 is a structural block diagram of a sphere decoding detection device according to an embodiment of the present disclosure. As shown in FIG. 3, the detection device 30 includes: a sorting module 310 configured for performing grouping rearrangement on a channel estimation matrix of a received signal to obtain an interfering user group and a target user group; and a detection module 320 configured for performing detection on the target user group and then performing detection on the interfering user group.

FIG. 4 is a structural block diagram of a sphere decoding detection device according to an embodiment of the present disclosure. As shown in FIG. 4, in addition to all the modules shown in FIG. 3, the detection device 40 further includes: a decomposition module 410 configured for performing sorted QR decomposition on the interfering user group, and then performing the sorted QR decomposition on the target user group.

FIG. 5 is a structural block diagram of a sphere decoding detection device according to an embodiment of the present disclosure. As shown in FIG. 5, in addition to all the modules shown in FIG. 4, the detection device 50 further includes: a determination module 510 configured for determining a number of users; performing QR decomposition on the target user in a case where the number of users is 1; and performing the QR decomposition on the target user group in a case where the number of users is greater than 1.

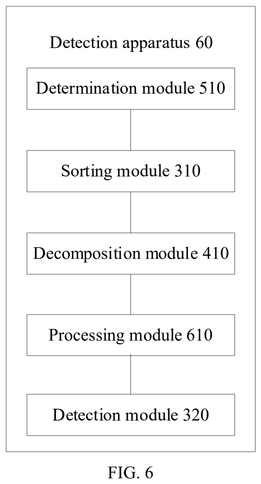

FIG. 6 is a structural block diagram of a sphere decoding detection device according to an embodiment of the present disclosure. As shown in FIG. 6, the detection device 60 further includes: a processing module 610 configured for preprocessing the received signal on which the QR decomposition has been completed.

It should be noted that the above modules may be implemented by software or hardware. The hardware implementation may be realized in the following manner, but the present disclosure is not limited thereto: the above modules are all located in the same processor; or, the above modules are combined arbitrarily and are respectively located in different processors.

An embodiment of the present disclosure further provides a computer-readable storage medium, storing a computer program. The computer program is configured for executing, when run, steps in any one of the above method embodiments.

In an example embodiment, the computer-readable storage medium may include, but is not limited to, any medium that can store the computer program, such as a USB flash drive, a read-only memory (ROM), a random access memory (RAM), a removable hard disk, a magnetic disk, or an optical disk.

An embodiment of the present disclosure further provides an electronic device, including a memory and a processor. The memory is configured for storing a computer program. The processor is configured for running the computer program to execute steps in any one of the above method embodiments.

In an example embodiment, the electronic device may further include a transmission device and an input/output device. The transmission device is connected to the processor. The input/output device is connected to the processor.

It will be apparent to those having ordinary skill in the art that, the modules or steps of the embodiments of the present disclosure may be realized by a general-purpose computing device; may be centrally deployed on a single computing device or distributed on a network composed of a plurality of computing devices; and may be implemented with program code executable by a computing device, and therefore may be stored in a storage device for execution by a computing device. In some cases, the steps shown or described may be performed in a different order than that described herein. Alternatively, the modules or steps may be respectively fabricated into integrated circuit modules, or a plurality of modules or steps may be fabricated into a single integrated circuit module. Therefore, the embodiments of the present disclosure are not limited to any particular combination of hardware and software.

In order for those having ordinary skill the art to better understand the technical schemes of the embodiments of the present disclosure, a method for identifying a problem cell, application embodiments are described in detail below.

Application Embodiment One

It is assumed that a multi-user MIMO system includes $M_T$ transmit data streams and $M_R \geq M_T$ receive antennas, bitstreams encoded from data streams are mapped onto a constellation diagram to form $M_T$ transmit symbols $S \in O^{M_T}$. $O$ is a constellation point collection. Using $M_R = 4, M_T = 4$ as an example, a received signal of a UE is expressed as:

$$Y = HS + N_0 \qquad (1)$$

wherein $Y$ represents the received signal; $H = \begin{bmatrix} h_{00} & h_{01} & h_{02} & h_{03} \\ h_{10} & h_{11} & h_{12} & h_{13} \\ h_{20} & h_{21} & h_{22} & h_{23} \\ h_{30} & h_{31} & h_{32} & h_{33} \end{bmatrix}$ represents a channel estimation matrix, wherein a row sequence number $i = 0,...,3$ and a column sequence number $j = 0,...,3$ of $h_{ij}$ correspond to a channel estimate between a receive antenna $i$ and transmit antenna $j$; $S = \begin{bmatrix} s_0^0 \\ s_1^0 \\ s_2^0 \\ s_0^1 \end{bmatrix}$ represents three parallel transmission data symbols of a target user UE0 (where this is also applicable to a case of multiple target users, for example, three layers of data are allocated to 2 to 3 target UEs, where the target users are not grouped) and one channel transmission data symbol of an interfering user UE1, wherein the superscripts 0 and 1 respectively correspond to UE0 and UE1, and the subscripts 0, 1, and 2 respectively correspond to the sequence numbers of the transmission data symbols, i.e., sequence numbers of the data layers; and $N_0$ is noise. When the power of the interfering user is much higher than the power of the target user, generally interfering suppression (e.g., Interfering Rejection Combining (IRC) and Interfering Cancellation (IC)) is performed first, and then MIMO detection of the target user is performed. When the power of the interfering user is less than or equivalent to the power of the target user, joint MIMO detection is performed on the target user and the interfering user using SD to obtain better performance.

When multi-user joint detection is performed using SD, sorted QR decomposition is first performed on $H$ in the formula (1):

$$H = QR = \begin{bmatrix} q_0 & q_1 & q_2 & q_3 \end{bmatrix} \begin{bmatrix} R_{00} & R_{01} & R_{02} & R_{03} \\ 0 & R_{11} & R_{12} & R_{13} \\ 0 & 0 & R_{22} & R_{23} \\ 0 & 0 & 0 & R_{33} \end{bmatrix} \qquad (2)$$

wherein a column vector $q_j$, $j = 0,...,3$ in a matrix $Q$ in QR decomposition represents a transmit antenna sequence number, an element $R_{ij}$, $i = 0,...,3$, $j = 0,...,3$ in a matrix $R$ corresponds to the receive antenna $i$ and the transmit antenna $j$.

After the sorted QR decomposition, the received signal is preprocessed using the following formula:

$$Z = Q^H Y = Q^H QRS + Q^H N_0 = RS + N_0' \qquad (3)$$

wherein, $Z$ represents the received signal after preprocessing, $Q^H$ represents the conjugate transpose of the matrix $Q$, and $N_0' = Q^H N_0$.

For ease of description, the formula (3) is written as a matrix as follows:

$$Z = \begin{bmatrix} z_0 \\ z_1 \\ z_2 \\ z_3 \end{bmatrix} = \begin{bmatrix} R_{00} & R_{01} & R_{02} & R_{03} \\ 0 & R_{11} & R_{12} & R_{13} \\ 0 & 0 & R_{22} & R_{23} \\ 0 & 0 & 0 & R_{33} \end{bmatrix} \begin{bmatrix} s_0^1 \\ s_0^0 \\ s_1^0 \\ s_2^0 \end{bmatrix} + N_0' \qquad (4)$$

wherein, $z_i$, $i = 0,...,3$ represents a receive antenna sequence number.

Compared with the formula (1), the arrangement order of the elements of S in the formula (4) are obtained assuming that positions are swapped in sorted QR decomposition. Maximum likelihood detection is to traverse and search all possible data symbols (corresponding to each point on the constellation diagram) of the elements of S in the formula (4) to achieve optimal performance. The output after search detection is a Likelihood Ratio (LLR) value. It is assumed that an LLR soft value outputted by a $k^{th}$ bit of an $i^{th}$ symbol may be expressed as:

$$LLR_{i,k} = \begin{cases} (D^{ML} - D^{MLC})/N_0, & \text{if } x_{i,k} = 0 \\ (D^{MLC} - D^{ML})/N_0, & \text{if } x_{i,k} = 1 \end{cases} \qquad (5)$$

wherein $x_{i,k}$ represents a value of the $k^{th}$ bit of the $i^{th}$ symbol on the constellation diagram corresponding to each element of S, $D^{ML} = min\|Z - RS^{ML}\|^2$ represents a minimum Euclidean distance of ML paths ($\|.\|^2$ represents finding the modulo square), $D^{MLC} = min\|Z - RS^{MLC}\|^2$ represents a minimum Euclidean distance of MLC paths which are a complementary set of the ML paths. The complementary set represents a collection of paths of each transmit signal obtained by removing paths corresponding to $x_{i,k}$ from the constellation diagram. Z represents the received signal after preprocessing in the formula (3), R in $RS^{ML}$ is the matrix R in the formula (2), and $S^{ML}$ represents S selected for the ML path in the formula (1).

The Euclidean distance is expressed as:

$$D = \left| z_3 - R_{33} s_2^0 \right|^2$$

$$+ \left| z_2 - R_{22} s_1^0 - R_{23} s_2^0 \right|^2$$

$$+ \left| z_1 - R_{11} s_0^0 - R_{12} s_1^0 - R_{13} s_2^0 \right|^2$$

$$+ \left| z_0 - R_{00} s_0^1 - R_{01} s_0^0 - R_{02} s_1^0 - R_{03} s_2^0 \right|^2 \tag{6}.$$

The traversal search detection involves a large amount of computation, and is difficult to implement in practice. The search detection part of SD is to simplify the traversal search process according to a certain optimization method to search only some constellation points corresponding to the elements of S. In the formula (6), the detection is performed in an order from the last row to the first row of the matrix R. The first detection is to calculate $\left| z_3 - R_{33} s_2^0 \right|^2$, wherein for $s_2^0$, all possible points on the constellation diagram are taken for calculation. Some of the values which are relatively small are kept, and the corresponding values of $s_2^0$ are substituted into the second detection to calculate $\left| z_2 - R_{22} s_1^0 - R_{23} s_2^0 \right|^2$.

Then, some of the values which are relatively small are kept, and the corresponding values of $s_2^0$、$s_1^0$ are substituted into the third detection. The remaining detections are performed similarly, until a complete D is obtained. Finally, the minimum value is selected from the multiple *D* kept as the minimum Euclidean distance of the ML path. Similarly, the SD search detection of the MLC paths are performed on the remaining paths other than the ML path.

The search detection part of SD has been briefly introduced above. In the embodiments of the present disclosure, a specific sorting criterion is used in the search detection. The specific sorting criterion is for the sorting sequence numbers used in the search detection. The order in which the decomposition is executed in QR decomposition is reverse to that in the search detection, i.e., the first element obtained by the QR decomposition is the last element processed in the search detection, and the last element obtained by the QR decomposition is the first element processed in the search detection. In the embodiments of the present disclosure, as long as the sorting criterion of the QR decomposition is determined, the sorting criterion of the search detection of the SD can also be determined, and then those skilled in the art can perform search detection according to the search detection steps described above and the technical means of search detection in the related art.

It should be understood that in practical implementations, conventional approaches that can be adopted only considers the SNR size during sorting, and does not consider the MCS and multi-user factors.

A sorting criterion provided by the embodiments of the present disclosure for the sorted QR decomposition for SD is embodied in the cyclic steps in the following table.

Table 1 Steps of sorted QR decomposition

| 1 | Initial value: |
|---|---|
| | $$Q = [q_0 \quad q_1 \quad q_2 \quad q_3] = H = \begin{bmatrix} h_{00} & h_{01} & h_{02} & h_{03} \\ h_{10} & h_{11} & h_{12} & h_{13} \\ h_{20} & h_{21} & h_{22} & h_{23} \\ h_{30} & h_{31} & h_{32} & h_{33} \end{bmatrix}$$ $$q_j = \begin{bmatrix} q_{0j} \\ q_{1j} \\ q_{2j} \\ q_{3j} \end{bmatrix}, j = 0, 1, 2, 3$$ R is initialized to an all-0 matrix; |
| 2 | For $i$ = 0, 1, 2, 3 ($i$ represents the row number, and $j$ represents the column number)<br>2.1 Calculate energy of each column of H |
| | For $j$ = i, ..., 3<br>$B_j = \|q_j\|^2 = |q_{0j}|^2 + |q_{1j}|^2 + |q_{2j}|^2 + |q_{3j}|^2$; ($|\cdot|$ represents a modulo step, corresponding to the energy of the column)<br>end<br>2.2 The columns are sorted according to the criterion provided by the embodiments of the present disclosure, denoted as $k_j$;<br>2.3 Columns $i$ and $k_j$ in Q and R are swapped;<br>2.4 $R_{ii}$ = sqrt($B_{ki}$); (sqrt represents the square root)<br>$q_i = [1/sqrt(B_{ki})] \cdot q_i$; (note: $q_i$ is column $i$ of Q after swapping)<br>2.5 Forj= $i$+1, ..., 3<br>$R_{ij} = q_i^H q_j$ ;<br>$q_j = q_j - q_i R_{ij}$; //(Update columns i+1 to 3 of Q)<br>End<br>End |

EP 4 718 789 A1

| 3 | Output |
|---|--------|

$$Q = \begin{bmatrix} q_{00} & q_{01} & q_{02} & q_{03} \\ q_{10} & q_{11} & q_{12} & q_{13} \\ q_{20} & q_{21} & q_{22} & q_{23} \\ q_{30} & q_{31} & q_{32} & q_{33} \end{bmatrix}, \quad R = \begin{bmatrix} R_{00} & R_{01} & R_{02} & R_{03} \\ 0 & R_{11} & R_{12} & R_{13} \\ 0 & 0 & R_{22} & R_{23} \\ 0 & 0 & 0 & R_{33} \end{bmatrix}$$

In the formula (4), the SD is performed in an order from the last row (corresponding to $R_{33}$) to the first row (corresponding to $R_{00}\sim R_{03}$) of the matrix R, and the QR decomposition is performed in an order from the leftmost column to the rightmost column of the matrix Q in the step 1 and starting from the first row of the matrix R (corresponding to $R_{00}\sim R_{03}$). In other words., the order of QR decomposition is reverse to the order of SD. The matrix R determined after sorted QR decomposition determines the detection order of the layers in SD search. An implementation of the criterion in the step 2.2 is as follows.

First, the columns corresponding to the target user UE0 and the column corresponding to the interfering user UE1 in the matrix Q are respectively defined as a user group 0 (corresponding columns $q_0$ $q_1$ $q_2$ ) and a user group 1 (corresponding to a column $q_3$ ). In QR decomposition, starting from the group 1, the step 2.3 is executed to swap the column $q_3$ with the column $q_0$ , denoted as column $k_0$ of the matrix Q, the first cycle of the steps 2.4 to 2.5 is performed to obtain the first row of the matrix R (corresponding to $R_{00}\sim R_{03}$). The columns $q_0$ $q_1$ $q_2$ are also updated (for exam ple, $j = i =$ 0, ..., 3, where first, if $i = 0$, $j = 0, 1, 2, 3$; then if $i = 1$, $j = 1, 2, 3$, i.e., two loops are nested).

Then, QR decomposition is performed on the columns $q_0$ $q_1$ $q_2$ according to MCSs and SNRs (if the bit rates of the users are the same, the MCS is only reflected in the modulation scheme; because noise corresponding to the columns can be normalized and unified, the descending order of SNRs is reflected in the descending order of energy of the columns in the step 2.1). Each column in each user group may correspond to a different MCS. The result of QR decomposition should be such that the column corresponding to the smallest SNR among the columns corresponding to the selected highest MCS corresponds to the first detection row of SD. After the first detection row is selected, SD is performed on the remaining columns in descending order of MCSs, where for the layers having the same MCS, SD is performed in descending order of SNRs. Alternatively, SD may be performed directly in descending order of SNRs without considering MCSs. The two sorting methods have similar performance, and the latter is selected to simplify the step.

It is assumed that columns $q_0$ $q_1$ correspond to MCS0,column $q_2$ corresponds to MCS1, and MCS0 is less than MCS1. The energy of the three columns obtained in the step 2.1 is sorted, and the column with the second smallest energy is selected. If the column with the second smallest energy is $q_1$ , the step 2.3 is executed to swap $q_1$ with $q_0$ (denoted as column $k_1$ of the matrix Q), and swap the corresponding rows of R. The second cycle of the steps 2.4 to 2.5 is performed to obtain the second row of the matrix R. The remaining columns $q_0$ $q_1$ are updated. Because MCS0 is less than MCS1, the last two columns are not sorted and the rest of the loop is executed.

It is assumed that columns $q_0$ $q_1$ correspond to MCS0,column $q_2$ corresponds to MCS1, and MCS0 is greater than MCS1. Because the low MCS corresponds to only one column (i.e., MCS1 corresponds to only one column of data, i.e., $q_2$ ), the step 2.3 is directly executed to swap $q_2$ with $q_0$ (denoted as column $k_1$ of the matrix Q), and swap the corresponding rows of R.The second cycle of the steps 2.4 to 2.5 is performed to obtain the second row of the matrix R. The remaining columns $q_0$ $q_1$ are updated. The third cycle continues to be performed. The energy of the two columns obtained in the step 2.1 is sorted, and the column with the smaller energy is selected. If the column with the smaller energy is $q_1$ , the step 2.3 is executed to swap $q_0$ $q_1$ , and swap the corresponding rows of R. The steps 2.4 to 2.5 are executed to obtain the third row of the matrix R.

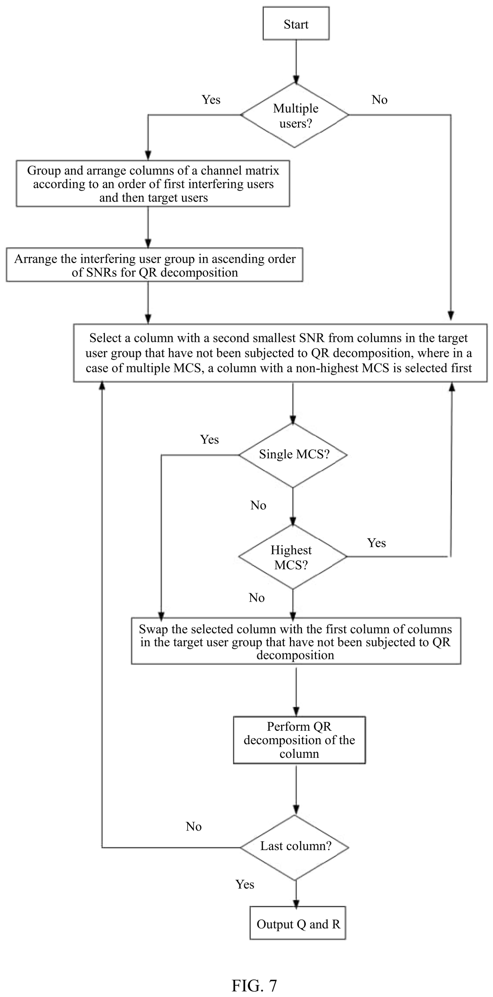

FIG. 7 is a diagram showing the principle of a QR decomposition process according to an embodiment of the present disclosure. As shown in FIG. 7, the QR decomposition process includes the following steps.

1. It is determined whether there are multiple users or there is only one user. If received data of all layers is allocated to a target user, and the data of all the layers needs to be detected to output an LLR, it is determined that there is only one user, and the following step 4 is executed. If received data of only part of layers is allocated to the target user, and the data of only part of the layers needs to be detected to output an LLR, it is determined that there are multiple users.

2. Columns of a channel matrix are grouped and rearranged according to target and interfering users, so that QR decomposition is first performed on an interfering user group and then performed on a target user group.

3. The interfering user group is rearranged in descending order of SNRs, so that QR decomposition is first performed on a column with a small SNR and then performed on a column with a large SNR.

4. In the target user group, if there is only one MCS, the following step 6 is directly executed. If there are multiple MCSs, a column with a second smallest SNR is first selected, and it is determined whether the MCS of the selected column is a highest MCS. If the selected column is a column with the highest MCS, a column with a second smallest SNR continues to be selected from the remaining columns. If the selected column is a column with the highest MCS, the following step 5 is executed.

5. The selected column with the second smallest SNR is swapped with the first column of columns in the target user group that have not been subjected to QR decomposition, so that the current QR decomposition (steps 2.3 to 2.5) is not the column with the smallest SNR and the highest MCS. The step 4 continues to be executed on the remaining columns until QR decomposition has been performed in all the columns with a non-highest MCS.

6. The column with the second smallest SNR among the columns corresponding to the highest MCS is selected and swapped with the first column of these columns, so that the current QR decomposition (steps 2.3 to 2.5) is not performed on the column with the smallest SNR. The step 5 continues to be executed on the remaining columns until QR decomposition is first performed on the columns having a non-smallest SNR and then performed on the column with the smallest SNR.

In the above embodiments, the specific sorting criterion is for the sorting sequence numbers used in the search detection. The order in which the decomposition is executed in QR decomposition is reverse to that in the search detection, i.e., the first element obtained by the QR decomposition is the last element processed in the search detection, and the last element obtained by the QR decomposition is the first element processed in the search detection. In practical implementations, conventional approaches that can be adopted only considers the SNR size during sorting, and does not consider the MCS and multi-user factors.

Both 5G NR and WIFI7 can use SD for MIMO detection. To more clearly demonstrate the effects of the technical schemes of the embodiments of the present disclosure, simulation of a 5G NR system receiver is used as an example, with the simulation conditions being as specified in 3GPP standards and the main simulation parameters being as shown in Table 2.

Table 2 List of simulation parameters for 5G NR

| Parameter | Unit | Value |
| --- | --- | --- |
| Uplink Downlink Configuration (UDC) | | FR1-1(7D1F2U) |
| Sub-Carrier Space (SCS) | | 30 KHz |
| Cyclic Prefix (CP) | | Normal |
| Cell ID (C-ID) | | 0 |
| Inter-TTI Distance (ITD) | | 1 |
| Number of Hybrid Automatic Repeat Request (HARQ) Processes | Process | 8 |
| Maximum number of HARQ transmissions | | 4 |
| Number of Orthogonal Frequency Division Multiplexing (OFDM) symbols for physical downlink control channel (PDCCH) | Number of OFDM symbols | 2 |
| Physical Uplink Shared Channel (PUSCH) demodulation reference signal | | Antenna port (AP) UE0: 0, 1; UE1: 2, 3 |
| Number of allocated resource blocks | Physical resource blocks | 272 |
| MCS | | UE0: MCS2. UE1: MCS21 |
| SNR | Power ratio of target UE0 to noise | 12 |
| Propagation Condition (PC) | | FR-1 TDLA30 |
| Correlation Matrix and Antenna Configuration (CMAC) | | 4x4 layers, high correlation |

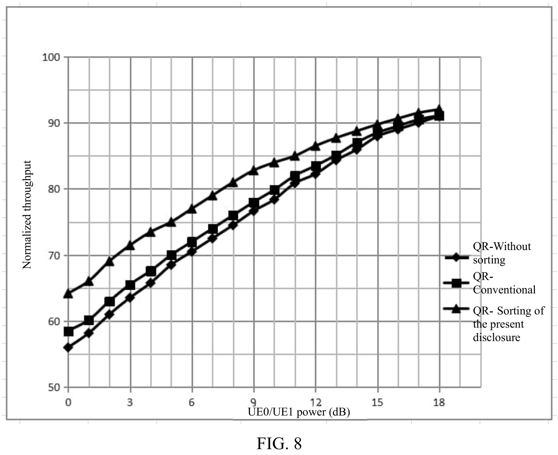

FIG. 8 is a diagram showing comparison of performance of different QR decomposition schemes of multi-user MIMO according to an embodiment of the present disclosure. As shown in FIG. 8, simulation results of unsorted QR decomposition, conventional sorted QR decomposition (with sorting only in descending order of SNRs), and sorted QR decomposition of the embodiments of the present disclosure under different power ratios between UE0 and UE1 are reflected by performance curves in the figure. It can be seen that the sorted QR decomposition of the embodiments of the present disclosure can obtain greater gain. Although sorting in the embodiments of the present disclosure is relatively complicated because three factors are considered, the amount of calculation required by the sorting operation accounts for a small proportion of the entire QR decomposition, i.e., the scheme of the embodiments of the present disclosure can achieve better performance with an acceptable processing complexity, and therefore is a method that can be implemented in practice.

To sum up, the sphere decoding detection method and device provided by the embodiments of the present disclosure solve the problem of how to properly sort the SD detection of layers in MIMO receivers of 5G NR and WIFI7, and can achieve higher performance with an acceptable processing complexity. The detection of the layers in SD is sorted considering the following three factors: whether a UE is a target UE or an interfering UE, whether an MCS is high or low, and whether an SNR is high or low. SD in multi-user MIMO is first performed on layers where target users are located, and then performed on layers where interfering users are located. SD detection is performed on columns of the interfering user in descending order of SNRs. In the detection of the target user, in the case of presence of multiple MCSs, when the number of target users is 1, detection is first performed on a layer corresponding to the highest MCS and the smallest SNR. When the number of target users is greater than 1, a layer corresponding to the highest MCS and the smallest SNR is first selected from the layers of all the target users for detection during multi-user joint detection. SD is performed on the remaining columns directly in descending order of SNRs. In the detection of the target user, if there is only one MCS, SD detection is first performed on a layer corresponding to the smallest SNR, and then SD detection is performed on the remaining columns in descending order of SNRs.

The above description is merely preferred embodiments of the present disclosure, and is not intended to limit the present disclosure. Various modifications and variations may be made to the embodiments of the present disclosure by those skilled in the art. Any modification, equivalent replacement, or improvement made without departing from the principle of the embodiments of the present disclosure shall fall within the scope of protection of the embodiments of the present disclosure.

**Claims**

1. A sphere decoding detection method, comprising:

   performing grouping rearrangement on a channel estimation matrix of a received signal to obtain an interfering user group and a target user group; and
   performing detection on the target user group and then performing detection on the interfering user group.

2. The method of claim 1, wherein performing grouping rearrangement on a channel estimation matrix of a received signal comprises:
   grouping and arranging columns of the channel estimation matrix according to an order of first target users and then interfering users.

3. The method of claim 1, wherein before performing detection on the target user group and then performing detection on the interfering user group, the method further comprises:
   performing sorted orthogonal-triangular decomposition (QR decomposition) on the interfering user group, and then performing the sorted QR decomposition on the target user group.

4. The method of claim 3, wherein performing sorted QR decomposition on the interfering user group comprises:
   performing, in ascending order of values of signal-to-noise ratios (SNRs) of the interfering user group, the sorted QR decomposition sequentially on columns of the interfering user group that correspond to the SNRs.

5. The method of claim 3, wherein performing the sorted QR decomposition on the target user group comprises:

   determining a number of modulation and coding schemes (MCSs) for the target user group;
   performing a first decomposition in response to the number of MCSs being 1, wherein the first decomposition is performing the sorted QR decomposition on a column of the target user group corresponding to a second smallest SNR, and repeatedly performing the first decomposition on remaining columns until the sorted QR decomposition has been completed for all the columns; and
   performing a second decomposition in response to the number of MCSs being greater than 1, wherein the second decomposition is performing the QR decomposition on a column of the target user group corresponding to a second smallest SNR and a non-highest MCS, and repeatedly performing the second decomposition on remaining columns until the QR decomposition has been completed for all the columns.

6. The method of claim 1, wherein before performing grouping rearrangement on a channel estimation matrix of a received signal, the method further comprises:
   determining a number of users; performing QR decomposition on the target user in response to the number of users being 1; and performing the QR decomposition on the target user group in response to the number of users being greater than 1.

7. The method of claim 1, wherein before performing detection on the target user group and then performing detection on the interfering user group, the method further comprises:
preprocessing the received signal on which the QR decomposition has been completed.

8. The method of claim 1, wherein performing detection on the target user group comprises:

in response to a number of MCSs being 1, performing search detection on a layer of the target user group corresponding to a smallest SNR, and then performing the search detection on remaining layers in descending order of SNRs; and
in response to the number of MCSs being greater than 1, performing the search detection on a layer of the target user group corresponding to a highest MCS and a smallest SNR, and then performing the search detection on remaining layers in descending order of SNRs.

9. The method of claim 1, wherein performing detection on the interfering user group comprises:
performing search detection on layers of the target user group in descending order of SNRs.

10. A sphere decoding detection device, comprising:

a sorting module configured for performing grouping rearrangement on a channel estimation matrix of a received signal to obtain an interfering user group and a target user group; and
a detection module configured for performing detection on the target user group and then performing detection on the interfering user group.

11. The device of claim 11, further comprising:
a decomposition module configured for performing sorted orthogonal-triangular decomposition (QR decomposition) on the interfering user group, and then performing the sorted QR decomposition on the target user group.

12. The device of claim 11, further comprising:
a determination module configured for determining a number of users; performing QR decomposition on the target user in response to the number of users being 1; and performing the QR decomposition on the target user group in response to the number of users being greater than 1.

13. The device of claim 11, further comprising:
a processing module configured for preprocessing the received signal on which the QR decomposition has been completed.

14. A computer-readable storage medium, storing a computer program, wherein the computer program, when executed by a processor, causes the processor to perform the method of any one of claims 1 to 9.

15. An electronic device, comprising a memory, a processor, and a computer program stored in the memory and executable by the processor, wherein the computer program, when executed by the processor, causes the processor to perform the method of any one of claims 1 to 9.

Input/output device 108

Transmission
device 106

Processor 102

FIG. 1

Memory
104

Perform grouping rearrangement on a channel estimation matrix of a
received signal to obtain an interfering user group and a target user
group

~ S202

Perform detection on the target user group and then perform
detection on the interfering user group

~ S204

FIG. 2

Detection apparatus 30

Sorting module 310

Detection module 320

FIG. 3

Detection apparatus 40

Sorting module310

Decomposition module 410

Detection module 320

FIG. 4

Detection apparatus 50

Determination module 510

Sorting module 310

Decomposition module 410

Detection module 320

FIG. 5

Detection apparatus 60

Determination module 510

Sorting module 310

Decomposition module 410

Processing module 610

Detection module 320

FIG. 6

```
                              ┌──────────┐
                              │  Start   │
                              └────┬─────┘
                                   │
              Yes          ╱◇◇◇◇◇◇◇◇◇◇◇◇╲        No
         ┌───────────────◇   Multiple   ◇───────────────┐
         │                 ◇   users?   ◇                │
         │                   ╲◇◇◇◇◇◇◇◇◇◇╱                │
         ▼                                               │
┌──────────────────────────┐                            │
│ Group and arrange columns│                            │
│ of a channel matrix      │                            │
│ according to an order of │                            │
│ first interfering users  │                            │
│ and then target users    │                            │
└────────────┬─────────────┘                            │
             ▼                                           │
┌──────────────────────────┐                            │
│ Arrange the interfering  │                            │
│ user group in ascending  │                            │
│ order of SNRs for QR     │                            │
│ decomposition            │                            │
└────────────┬─────────────┘                            │
             │                                           │
             ▼                                           ▼
```

Group and arrange columns of a channel matrix according to an order of first interfering users and then target users

Arrange the interfering user group in ascending order of SNRs for QR decomposition

Select a column with a second smallest SNR from columns in the target user group that have not been subjected to QR decomposition, where in a case of multiple MCS, a column with a non-highest MCS is selected first

Single MCS? — Yes

Single MCS? — No

Highest MCS? — Yes

Highest MCS? — No

Swap the selected column with the first column of columns in the target user group that have not been subjected to QR decomposition

Perform QR decomposition of the column

Last column? — No

Last column? — Yes

Output Q and R

FIG. 7

FIG. 8

## INTERNATIONAL SEARCH REPORT

| | International application No. |
|---|---|
| | **PCT/CN2024/080182** |

**A. CLASSIFICATION OF SUBJECT MATTER**

H04L 25/02(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXT, DWPI, CNKI, IEEE: 球形译码, Sphere Decoding, SD, 检测, detect+, 信道估计矩阵, channel estimat+, matrix, 干扰, interfere+, 目标, target, 用户, user, 正交三角分解, QR分解, QR Decomposition

**C. DOCUMENTS CONSIDERED TO BE RELEVANT**

| Category* | Citation of document, with indication, where appropriate, of the relevant passages | Relevant to claim No. |
|---|---|---|
| X | CN 115481521 A (SANECHIPS TECHNOLOGY CO., LTD.) 16 December 2022 (2022-12-16) description, paragraphs 29-170 | 1-15 |
| A | CN 109818891 A (CHONGQING UNIVERSITY OF POSTS AND TELECOMMUNICATIONS) 28 May 2019 (2019-05-28) entire document | 1-15 |
| A | CN 113517941 A (GUANGZHOU INSTITUTE OF TECHNOLOGY, XIDIAN UNIVERSITY) 19 October 2021 (2021-10-19) entire document | 1-15 |
| A | CN 104486046 A (NO.54 RESEARCH INSTITUTE OF CETC) 01 April 2015 (2015-04-01) entire document | 1-15 |
| A | WO 2018082775 A1 (HUAWEI TECHNOLOGIES CO., LTD. et al.) 11 May 2018 (2018-05-11) entire document | 1-15 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 April 2024** | **07 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/080182**

| Patent document cited in search report | | | Publication date (day/month/year) | Patent family member(s) | | | Publication date (day/month/year) |
|---|---|---|---|---|---|---|---|
| CN | 115481521 | A | 16 December 2022 | WO | 2022252760 | A1 | 08 December 2022 |
| | | | | EP | 4344073 | A1 | 27 March 2024 |
| | | | | KR | 20240004665 | A | 11 January 2024 |
| CN | 109818891 | A | 28 May 2019 | None | | | |
| CN | 113517941 | A | 19 October 2021 | None | | | |
| CN | 104486046 | A | 01 April 2015 | None | | | |
| WO | 2018082775 | A1 | 11 May 2018 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310595845